# DEMANDE DE BREVET EUROPEEN

(11) **EP 1 619 829 A1**
(43) Date de publication de la demande: **25.01.2006**
(21) Numéro de dépôt: 05300569.0
(22) Date de dépôt: 07.07.2005
(51) Int. Cl.: H04L 12/24

(54) **Réseau local à groupe(s) virtuel(s) d'équipements propres à la commutation de niveau deux**

(30) Priorité: 22.07.2004 FR 0451627
(71) Demandeur: ALCATEL, 75008 Paris (FR)
(72) Inventeur: Ivaldi, Guillaume, Californie, 91302 (US); Melahn, Steve, Californie, 91401 (US)

(57) **Abrégé**

Un réseau local comprend un équipement périphérique (EP) assurant une commutation de niveau 2 et comportant des moyens d'agrégation de liens physiques (MAL), et des premier (EC1) et second (EC2) équipements de coeur assurant une commutation de niveau 2 et comportant des moyens d'agrégation de liens physiques (MAL'). L'équipement périphérique (EP) est connecté aux premier (EC1) et second (EC2) équipements de coeur par des premier (L1) et second (L2) liens physiques, et les premier et second équipements de coeur sont connectés l'un à l'autre par un troisième lien physique (L3). Les premier (EC1) et second (EC2) équipements de coeur comprennent en outre respectivement des premiers (MG1) et seconds (MG2) moyens de gestion chargés chacun de détecter la présence de l'équipement de coeur qu'ils n'équipent pas, via le troisième lien physique de couplage (L3), et, en cas de détection mutuelle, d'ordonner la transmission d'un identifiant commun à l'équipement périphérique (EP) de sorte qu'il considère les premier (EC1) et second (EC2) équipements de coeur comme un unique commutateur de niveau 2 et que ses moyens d'agrégation (MAL) établissent l'agrégation des premier (L1) et second (L2) liens physiques avec les moyens d'agrégation (MAL') des premier et second équipements de coeur.

## Description

L'invention concerne le domaine des réseaux locaux, et plus particulièrement les transmissions de données entre des équipements périphériques et des équipements de coeur, propres chacun à la commutation dite de niveau deux (ou « layer 2 »).

On entend ici par « commutation de niveau deux » une commutation permettant la transmission de données en mode point à point (ou « unicast »), en mode point à multipoints (ou « multicast ») ou en mode multipoints à multipoints (ou « broadcast »). Il est par ailleurs rappelé que la commutation dite de niveau trois concerne le routage. Bien entendu, certains équipements, appelés commutateurs/routeurs (ou « switchs/routers »), peuvent assurer à la fois la commutation de niveau deux et la commutation de niveau trois.

De nombreux réseaux locaux (ou LAN pour « Local Area Network ») comprennent une architecture physique dans laquelle des équipements périphériques à commutation de niveau deux sont connectés à au moins deux équipements de coeur à commutation de niveau deux. L'équipement périphérique est connecté par au moins un lien physique à chacun des deux équipements de coeur, lesquels sont également connectés entre eux par au moins un lien physique. Cette architecture offre donc une redondance de liens aux équipements périphériques.

Cependant, ces liens redondants permettent la formation de boucles susceptibles d'entraîner un « effondrement » du réseau en cas de transmission de données en mode broadcast ou multicast. Pour remédier à cet inconvénient, il est avantageux, voire indispensable, de configurer les équipements périphériques et de coeur de sorte qu'ils mettent en oeuvre une technique dite de « spanning tree ». Cette technique consiste à détecter puis à neutraliser les éventuelles boucles de niveau deux. Pour ce faire, en présence d'au moins deux liens physiques redondants entre un équipement périphérique et deux équipements de coeur, on place dans l'équipement périphérique, l'un des deux ports physiques, associés respectivement aux deux liens, dans un mode de transmission (ou « forwarding ») et l'autre dans un mode bloquant (ou « blocking ») pour toutes les transmissions de données. Ainsi, les données diffusées ne peuvent emprunter que le trajet qui comporte le port non bloqué.

Les liens contenant des ports bloqués n'étant plus utilisés, une partie de la bande passante est donc gâchée. Par ailleurs, lorsque le lien contenant un port non bloqué ou le lien entre équipements de coeur est interrompu, il faut un temps relativement long, jusqu'à trente secondes, pour que cette technique débloque un autre lien contenant un port précédemment bloqué. Certes, il a été proposé une technique plus rapide appelée « Rapid Reconfiguration », définie par le standard IEEE 802.1 D - 2004, permettant un déblocage de lien inférieur à la seconde, mais, d'une manière générale, il existe toujours des liens comportant un port bloqué et donc une partie de la bande passante est toujours gâchée, il s'agit là du coût de la redondance.

Afin d'améliorer l'utilisation de la bande passante, il a été proposé le standard IEEE 802.3ad. Celui-ci permet d'agréger les liens redondants de manière à offrir à l'équipement périphérique une plus grande capacité de transmission de données. Cela permet de mettre en oeuvre un mécanisme de répartition de charge (ou « load sharing ») et un mécanisme rapide de rétablissement de lien en cas de panne. Cependant, ce standard impose que des liens redondants agrégés se terminent au niveau d'un même commutateur de coeur, ce qui en limite l'intérêt. En outre, cela ne permet pas de solutionner l'inconvénient précité, introduit par la technique de Spanning Tree.

La société Nortel a également proposé sous l'acronyme S-MLT (pour « Split-Multi-Link Trunking ») une technique d'agrégation de liens partant d'un même équipement périphérique et aboutissant au niveau de deux équipements de coeur différents. Cependant, en cas de problème sur le lien entre les deux équipements de coeur, l'équipement périphérique n'en est pas informé, si bien qu'une partie des données transmises grâce à l'agrégation peut être perdue. L'intégrité du réseau local n'est donc plus maintenue. De plus, il s'agit d'une solution propriétaire. En outre, cette technique impose un volume de trafic entre les équipements de coeur afin qu'ils puissent synchroniser leurs connaissances.

La société Hewlett Packard a également proposé sous l'expression anglaise « Switch Meshing » une alternative à la technique de spanning tree, permettant une utilisation améliorée de la bande passante. Les liens redondants sont en permanence utilisables pour la transmission de données, permettant ainsi une réactivité rapide en cas de problème sur un lien. Cette technique est intéressante pour l'ingénierie de trafic, mais elle nécessite des traitements spécifiques au niveau de chaque équipement. En outre, en raison de la complexité qu'elle introduit dans les réseaux locaux, cette technique est difficilement compatible avec leur croissance. De plus, il s'agit d'une solution propriétaire pour tous les équipements, qu'ils soient périphériques ou de coeur. Par ailleurs, le nombre d'équipements (périphériques et de coeur) pouvant offrir la fonctionnalité est limité à quinze.

Aucune technique connue n'apportant une entière satisfaction, l'invention a donc pour but d'améliorer la situation.

Elle propose à cet effet un réseau local comprenant au moins un équipement périphérique, capable d'assurer une commutation de niveau deux et comportant des moyens d'agrégation de liens physiques, et au moins des premier et second équipements de coeur, également capables d'assurer une commutation de niveau deux et comportant des moyens d'agrégation de liens physiques, l'équipement périphérique étant connecté aux premier et second équipements de coeur respectivement par au moins des premier et second liens physiques, et les premier et second équipements de coeur étant connectés l'un à l'autre par au moins un troisième lien physique.

Ce réseau local se caractérise par le fait que ses premier et second équipements de coeur comprennent respectivement des premiers et seconds moyens de gestion chargés chacun de détecter la présence de l'équipement de coeur qu'ils n'équipent pas (via le troisième lien physique de couplage), et, en cas de détection mutuelle, d'ordonner la transmission d'un identifiant commun à l'équipement périphérique de sorte qu'il considère les premier et second équipements de coeur comme un unique commutateur de niveau deux, puis que ses moyens d'agrégation établissent l'agrégation des premier et second liens physiques avec les moyens d'agrégation des premier et second équipements de coeur.

L'identifiant commun peut être prédéterminé. Dans ce cas, il est par exemple stocké dans des mémoires que comprennent chacun des premiers et seconds moyens de gestion. En variante, l'identifiant commun peut être déterminé conjointement par les premiers et seconds moyens de gestion lors d'une procédure de négociation.

Par ailleurs, en l'absence de détection, les premiers et seconds moyens de gestion peuvent être chacun agencés de manière à ordonner la transmission à l'équipement périphérique de l'identifiant personnel de l'équipement de coeur dans lequel ils sont respectivement installés.

En outre, l'équipement périphérique peut être équipé de moyens de gestion auxiliaires chargés de mettre en oeuvre une technique de type Spanning Tree de manière à gérer l'accès aux premier et second liens physiques. Dans ce cas, lorsqu'un agrégat de liens a été établi consécutivement à la transmission d'un identifiant commun, les moyens de gestion auxiliaire sont agencés de manière à se placer dans un mode de transmission autorisant la transmission de données sur les premier et second liens physiques.

De plus, lorsque les premier et second équipements de coeur sont également connectés l'un à l'autre par au moins un quatrième lien physique, il est avantageux qu'ils soient chacun équipés de moyens de gestion auxiliaires mettant en oeuvre une technique de type Spanning Tree leur permettant de gérer l'accès aux troisième et quatrième liens physiques. Dans ce cas, lorsqu'un agrégat de liens a été établi avec les troisième et quatrième liens physiques par les moyens d'agrégation des premier et second équipements de coeur, les moyens de gestion des premier et second équipements de coeur sont préférentiellement agencés de manière à ordonner aux moyens de gestion auxiliaires de ces derniers de se placer dans un mode de transmission autorisant la transmission de données sur les troisième et quatrième liens physiques.

D'autres caractéristiques et avantages de l'invention apparaîtront à l'examen de la description détaillée ci-après, et des dessins annexés, sur lesquels :
- la figure 1 illustre de façon schématique une partie d'un premier exemple de réseau local selon l'invention,
- la figure 2 illustre le réseau de la figure 1 en présence d'une interruption de lien entre les deux équipements de coeur, et
- la figure 3 illustre de façon schématique une partie d'un second exemple de réseau local selon l'invention.

Les dessins annexés pourront non seulement servir à compléter l'invention, mais aussi contribuer à sa définition, le cas échéant.

L'invention a pour objet de permettre une optimisation générale de l'utilisation de la bande passante dans les réseaux locaux (ou LAN pour Local Area Network), aussi bien en fonctionnement normal qu'en fonctionnement dégradé, suite à une défaillance de lien.

Tout type de réseau local est ici concerné par l'invention, celle-ci étant indépendante du medium ou des media utilisé(s). Il pourra donc s'agir, notamment, d'un réseau filaire en cuivre ou à fibres optiques, ou d'un réseau de type Ethernet.

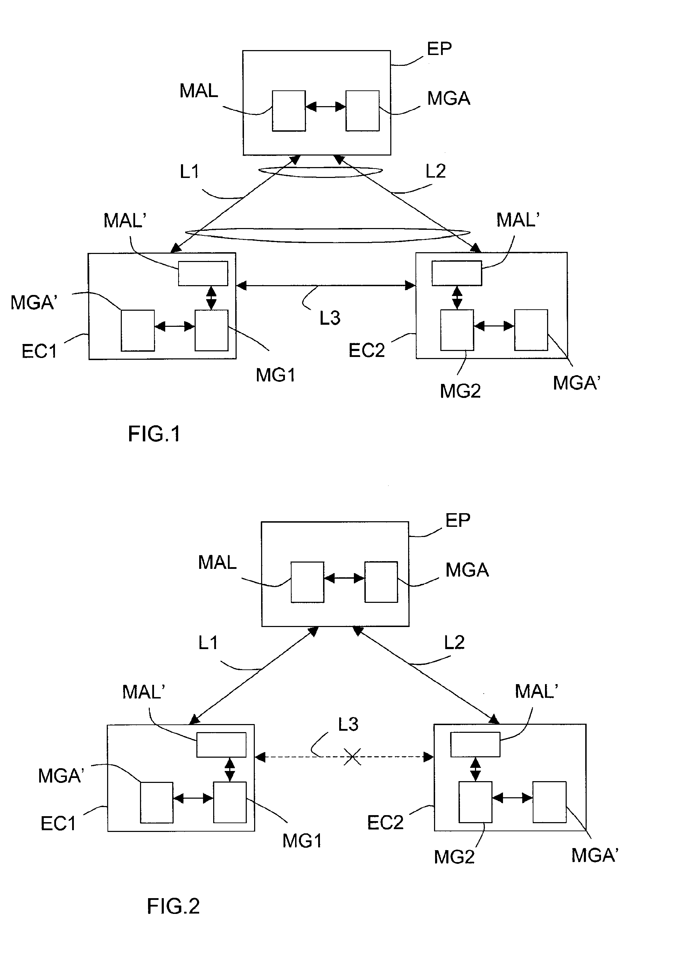

On se réfère tout d'abord à la figure 1 pour décrire un premier exemple de réseau local selon l'invention.

Un réseau local selon l'invention comporte, d'une part, au moins un équipement périphérique EP, capable d'assurer une commutation de niveau deux, telle que définie dans la partie d'introduction, et comprenant un module d'agrégation de liens physiques MAL, et d'autre part, au moins des premier EC1 et second EC2 équipements de coeur, également capables chacun d'assurer une commutation de niveau deux et comprenant chacun un module d'agrégation de liens physiques MAL'.

On entend ici par « module d'agrégation de liens physiques » un module fonctionnant selon le standard IEEE 802.3ad de manière à permettre l'agrégation dynamique de liens physiques entre l'équipement dans lequel il est installé et un autre équipement distant.

Par exemple, l'équipement périphérique EP constitue un commutateur de niveau deux (ou « layer 2 switch »). Par ailleurs, les premier EC1 et second EC2 équipements de coeur peuvent être soient simplement des commutateurs de niveau deux (ou layer 2 switches), soient à la fois des commutateurs de niveau deux et des routeurs de niveau trois (ou switches/routers). Chaque équipement, qu'il soit périphérique (EP) ou de coeur (EC1, EC2), dispose d'un identifiant de châssis propre qui permet notamment de l'identifier.

L'équipement périphérique EP est connecté, d'une part, au premier équipement de coeur EC1 par au moins un premier lien physique L1, et d'autre part, au second équipement de coeur EC2 par au moins un deuxième lien physique L2. Bien entendu, l'équipement périphérique EP pourrait être connecté à l'un au moins des premier EC1 et second EC2 équipements de coeur par plusieurs (au moins deux) liens physiques.

Par ailleurs, les premier EC1 et second EC2 équipements de coeur sont connectés l'un à l'autre par au moins un troisième lien physique L3. Bien entendu, les premier EC1 et second EC2 équipements de coeur pourraient être connectés l'un à l'autre par plusieurs (au moins deux) liens physiques.

Selon l'invention, le premier équipement de coeur EC1 comprend un premier module de gestion MG1 chargé de détecter la présence du second équipement de coeur EC2 via le troisième lien physique de couplage L3 (et les éventuels autres liens physiques qui les couplent). De même, le second équipement de coeur EC2 comprend un second module de gestion MG2 chargé de détecter la présence du premier équipement de coeur EC1 via le troisième lien physique de couplage L3 (et les éventuels autres liens physiques qui les couplent).

La détection peut se faire par tout moyen connu de l'homme de l'art, et notamment par échange de messages dédiés ou par observation du trafic ou des messages de service échangés sur les liens physiques établis entre les équipements de coeur concernés. A cet effet, on peut par exemple utiliser les protocoles de topologie de type AMAP (de la société Alcatel) ou NDP.

Chaque module de gestion MG1, respectivement MG2, est agencé, lorsqu'il a détecté la présence de l'équipement de coeur distant EC2, respectivement EC1, d'ordonner à son équipement de coeur EC1, respectivement EC2, de transmettre un identifiant commun à l'équipement périphérique EP via le premier lien physique L1, respectivement le second lien physique L2. Cet identifiant commun est un identifiant de châssis virtuel destiné à faire croire à l'équipement périphérique EP que les premier L1 et deuxième L2 liens physiques aboutissent au niveau d'un unique commutateur de niveau deux virtuel. Ce commutateur de niveau deux virtuel représente donc ici un groupe virtuel de deux commutateurs de niveau deux. Mais, il pourrait en représenter plus de deux, par exemple si un troisième équipement de coeur, également connecté à l'équipement périphérique EP, était interposé entre les premier EC1 et second EC2 équipements de coeur.

L'identifiant commun peut être prédéterminé, c'est-à-dire défini à l'avance. Il peut alors être stocké dans des mémoires que comprennent chacun des premier MG1 et second MG2 modules de gestion, par exemple. Dans ce cas, lorsque les premier MG1 et second MG2 modules de gestion détectent mutuellement les équipements de coeur dans lesquels ils ne sont pas installés, ils extraient chacun de leur mémoire l'identifiant commun afin de le communiquer à leur équipement de coeur EC1, EC2 respectif en vue de sa transmission à l'équipement périphérique EP via les premier L1 et deuxième L2 liens physiques. Les mémoires peuvent être mortes (« ROM ») ou vives (« RAM »).

Dans une variante particulièrement avantageuse, l'identifiant commun peut être déterminé conjointement par les premier MG1 et second MG2 modules de gestion au moyen d'une procédure de négociation. Plus précisément, lorsque les premier MG1 et second MG2 modules de gestion détectent mutuellement les équipements de coeur dans lesquels ils ne sont pas installés, ils s'adressent des messages de négociation dédiés de manière à se mettre d'accord sur un identifiant commun, par exemple choisi dans une liste prédéfinie. Puis, une fois qu'ils se sont mis d'accord, ils communiquent l'identifiant commun négocié à leurs équipements de coeur EC1, EC2 respectifs en vue de sa transmission à l'équipement périphérique EP via les premier L1 et deuxième L2 liens physiques.

L'équipement périphérique EP comprenant que ses deux liens physiques L1 et L2 aboutissent au niveau d'un même équipement de coeur (virtuel), son module d'agrégation MAL peut alors les agréger dynamiquement, en coopération avec les modules d'agrégation MAL' des premier EC1 et second EC2 équipements de coeur, pour former un lien logique conformément au standard IEEE 802.3ad.

La bande passante offerte par les premier L1 et second L2 liens physiques peut alors être intégralement utilisée pour la transmission de données entre l'équipement périphérique EP et les premier EC1 et second EC2 équipements de coeur, avec la certitude que le troisième lien physique L3 est utilisable. En d'autres termes, il n'y a pas de risque que des données soient perdues du fait d'un problème au niveau du troisième lien physique L3, puisque les premier MG1 et second MG2 modules de gestion détectent mutuellement les équipements de coeur EC2 et EC1 dans lesquels ils ne sont pas installés.

Bien entendu, les premier MG1 et second MG2 modules de gestion effectuent leur détection en permanence. Ainsi, lorsqu'ils ne détectent plus les équipements de coeur EC2 et EC1, dans lesquels ils ne sont pas installés, par exemple en raison de l'interruption du troisième lien physique L3, ils ordonnent à leur équipement de coeur EC1, EC2 de transmettre à l'équipement périphérique EP leur propre identifiant personnel, après avoir préalablement mis fin à l'agrégat virtuel (ou groupe virtuel) de commutateur de niveau deux en envoyant un paquet de type LACP-PDU « leave » (pour « Link Aggregation Control Protocol - Packet Data Unit ») sur chacun des premier L1 et deuxième L2 liens des équipements de coeur EC1 et EC2. Une fois que l'équipement périphérique EP a reçu les paquets LACP-PDU et les deux identifiants personnels, respectivement sur les premier L1 et deuxième L2 liens physiques, il alerte son module d'agrégation de liens MAL afin qu'il mette fin à l'agrégat constitué des premier L1 et deuxième L2 liens physiques. Ce lien n'a en effet plus lieu d'exister du fait que les premier EC1 et second EC2 équipements de coeur ne constituent plus un groupe virtuel suite à l'interruption du troisième lien physique L3. Cette situation est schématiquement illustrée sur la figure 2.

Afin d'éviter les boucles, en particulier lors de la transmission de données en mode broadcast, l'équipement périphérique EP, comme illustré sur les figures 1 et 2, peut être également équipé d'un module de gestion auxiliaire MGA chargé de mettre en oeuvre la technique de Spanning Tree ou de Rapid Reconfiguration, présentée dans la partie introductive. Il peut ainsi placer dans un état bloquant le port de l'un des premier L1 et deuxième L2 liens physiques, l'autre lien physique étant alors placé dans un état de transmission (non bloquant). Cela est notamment utile avant qu'une agrégation de liens ait eu lieu.

Lorsque le module d'agrégation de liens MAL de l'équipement périphérique EP a établi un agrégat de liens consécutivement à la réception d'un identifiant commun définissant un groupe virtuel d'équipements de coeur EC1 et EC2, son module de gestion auxiliaire MGA se place immédiatement dans un mode de transmission autorisant la transmission de données sur les premier L1 et deuxième L2 liens physiques. Il demeure donc actif, ce qui lui permet, dès qu'une agrégation est supprimée, de déterminer le lien physique de transmission et le lien physique contenant un port bloqué.

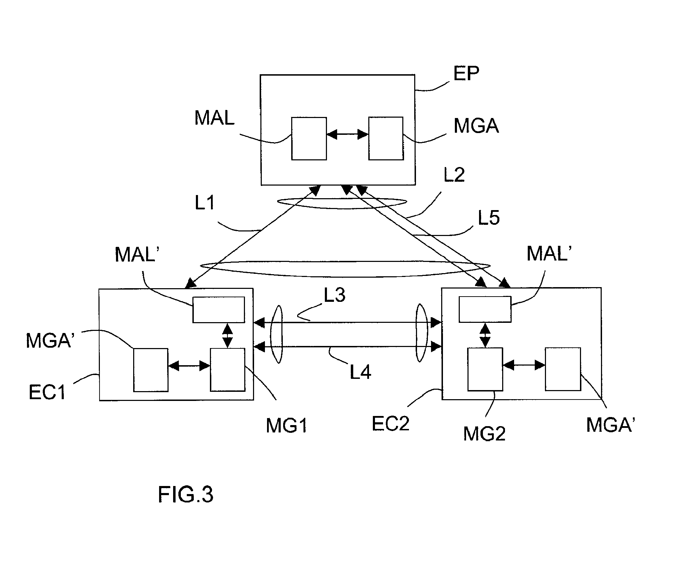

Comme indiqué précédemment et comme cela est illustré sur la figure 3, les premier EC1 et second EC2 équipements de coeur peuvent être également connectés l'un à l'autre par au moins un quatrième lien physique L4. Dans ce cas, il est avantageux qu'ils comportent chacun un module de gestion auxiliaire MGA' (mettant en oeuvre une technique de type Spanning Tree), du type de celui (MGA) qui est éventuellement installé dans l'équipement périphérique EP. Grâce à ces modules de gestion auxiliaire MGA', ils peuvent gérer l'accès aux troisième L3 et quatrième L4 liens physiques.

Lorsque les modules d'agrégation de liens MAL' des équipements de coeur EC1 et EC2 ont établi un agrégat de liens avec les troisième L3 et quatrième L4 liens physiques, leurs modules de gestion auxiliaire MGA' se placent immédiatement dans un mode de transmission autorisant la transmission de données sur les troisième L3 et quatrième L4 liens physiques. Ils demeurent donc tous les deux actifs, ce qui leur permet, dès que l'agrégation est supprimée, de déterminer le lien physique de transmission et le lien physique contenant le port bloqué.

L'équipement périphérique EP peut être connecté à l'un au moins des équipements de coeur EC1, EC2 par plusieurs liens physiques. C'est notamment le cas dans l'exemple de la figure 3 où l'équipement périphérique EP est connecté au second équipement de coeur EC2 par le deuxième lien physique L2 ainsi que par un cinquième lien physique L5.

Les modules de gestion MG1 et MG2, modules de gestion auxiliaire MGA et MGA', et modules d'agrégation de liens MAL et MAL' peuvent être réalisés sous la forme de circuits électroniques, de modules logiciels (ou informatiques), ou d'une combinaison de circuits et de logiciels.

L'invention ne se limite pas aux modes de réalisation d'équipement de coeur, d'équipement périphérique, et de réseau local décrits ci-avant, seulement à titre d'exemple, mais elle englobe toutes les variantes que pourra envisager l'homme de l'art dans le cadre des revendications ci-après.

## Revendications

1. Réseau local comprenant au moins un équipement périphérique (EP), propre à assurer une commutation de niveau deux et comportant des moyens d'agrégation de liens physiques (MAL), et au moins des premier (EC1) et second (EC2) équipements de coeur, propres à assurer une commutation de niveau deux et comportant des moyens d'agrégation de liens physiques (MAL'), ledit équipement périphérique (EP) étant connecté auxdits premier (EC1) et second (EC2) équipements de coeur respectivement par au moins des premier (L1 ) et second (L2) liens physiques, et lesdits premier (EC1) et second (EC2) équipements de coeur étant connectés l'un à l'autre par au moins un troisième lien physique (L3), **caractérisé en ce que** lesdits premier (EC1) et second (EC2) équipements de coeur comprennent respectivement des premiers (MG1) et seconds (MG2) moyens de gestion agencés chacun pour détecter la présence de l'équipement de coeur (EC2,EC1) qu'ils n'équipent pas, via ledit troisième lien physique de couplage (L3), et, en cas de détection mutuelle, pour ordonner la transmission d'un identifiant commun audit équipement périphérique (EP) de sorte qu'il considère lesdits premier (EC1) et second (EC2) équipements de coeur comme un unique commutateur de niveau deux et que ses moyens d'agrégation (MAL) établissent l'agrégation desdits premier (L1) et second (L2) liens physiques avec lesdits moyens d'agrégation (MAL') desdits premier (EC1) et second (EC2) équipements de coeur.

2. Réseau selon la revendication 1, **caractérisé en ce que** ledit identifiant commun est prédéterminé.

3. Réseau selon la revendication 2, **caractérisé en ce que** ledit identifiant commun prédéterminé est stocké dans une mémoire de chacun desdits premiers (MG1) et seconds (MG2) moyens de gestion.

4. Réseau selon la revendication 1, **caractérisé en ce que** lesdits premiers (MG1) et seconds (MG2) moyens de gestion sont agencés, en cas de détection mutuelle, pour effectuer une procédure de négociation destinée à déterminer conjointement ledit identifiant commun.

5. Réseau selon l'une des revendications 1 à 4, **caractérisé en ce qu'**en l'absence de détection, lesdits premiers (MG1) et seconds (MG2) moyens de gestion sont chacun agencés pour ordonner la transmission audit équipement périphérique (EP) de l'identifiant personnel de l'équipement de coeur (EC1, EC2) dans lequel ils sont respectivement installés.

6. Réseau selon l'une des revendications 1 à 5, **caractérisé en ce qu'**au moins ledit équipement périphérique (EP) est équipé de moyens de gestion auxiliaires (MGA) propres à mettre en oeuvre une technique de type « Spanning Tree » de manière à gérer l'accès auxdits premier (L1) et second (L2) liens physiques, et en cas d'établissement d'un agrégat de liens, consécutif à la réception d'un identifiant commun, à se placer dans un mode dit « de transmission » autorisant la transmission de données sur lesdits premier (L1) et second (L2) liens physiques.

7. Réseau selon l'une des revendications 1 à 6, **caractérisé en ce que** lesdits premier (EC1) et second (EC2) équipements de coeur sont également connectés par au moins un quatrième lien physique (L4) et sont chacun équipés de moyens de gestion auxiliaires (MGA) propres à mettre en oeuvre une technique de type « Spanning Tree » de manière à gérer l'accès auxdits troisième (L3) et quatrième (L4) liens physiques, et **en ce qu'**en cas d'établissement d'une agrégation des troisième (L3) et quatrième (L4) liens physiques par lesdits moyens d'agrégation (MAL') desdits premier (EC1) et second (EC2) équipements de coeur, lesdits moyens de gestion auxiliaire (MGA) desdits premier (EC1) et second (EC2) équipements de coeur sont agencés pour se placer dans un mode dit « de transmission » autorisant la transmission de données sur lesdits troisième (L3) et quatrième (L4) liens physiques.

8. Réseau selon l'une des revendications 1 à 7, **caractérisé en ce que** lesdits premier (EC1 ) et second (EC2) équipements de coeur sont des commutateurs de niveau deux.

9. Réseau selon l'une des revendications 1 à 7, **caractérisé en ce que** lesdits premier (EC1) et second (EC2) équipements de coeur sont des commutateurs/routeurs.

10. Réseau selon l'une des revendications 1 à 9, **caractérisé en ce que** ledit équipement périphérique (EP) est un commutateur de niveau deux.
